# EUROPEAN PATENT APPLICATION

(11) **EP 2 206 680 A2**
(43) Date of publication of application: **14.07.2010**
(21) Application number: 09178854.7
(22) Date of filing: 11.12.2009
(51) Int. Cl.: C01B 6/21

(54) **Synthesis of Alkali Metal Dodecaborates**

(30) Priority: 09.01.2009 US 204752 P
(71) Applicant: Rohm and Haas Company, Philadelphia, Pennsylvania 19106-2399 (US)
(72) Inventor: Cartolano, Anthony Rocco, Orefield, PA 18069 (US); Teich, Cheryl Irene, Chalfont, PA 18914 (US); Ivanov, Sergei Vladimirovich, Schecksville, PA 18078 (US); Yamamoto, John Hiroshi, New Britian, PA 18901 (US)
(74) Representative: Buckley, Guy Julian

(57) **Abstract**

A method for preparing M₂B₁₂H₁₂, wherein M is an alkali metal, from an alkali metal borohydride and an amine borane. The method includes a step of allowing the alkali metal borohydride to react with excess amine borane in contact with a complexing agent.

## Description

### Background

This invention relates generally to a method for preparing M₂B₁₂H₁₂ from amine borane and sodium borohydride.

Processes for production of M₂B₁₂H₁₂ from boranes and sodium borohydride are well known. For example, U.S. Pat. No. 3,551,120 describes preparation of M₂B₁₂H₁₂ from boranes and sodium borohydride. However, yields are low due to formation of other hydroborate species as products.

The problem addressed by this invention is to provide a more efficient process for producing M₂B₁₂H₁₂ from boranes and borohydride salts.

### Statement of Invention

The present invention is directed to a method for preparing M₂B₁₂H₁₂, wherein M is an alkali metal, from an alkali metal borohydride and an amine borane. The method comprises allowing the alkali metal borohydride to react with excess amine borane in contact with a complexing agent selected from the group consisting of: (i) rings containing nine to twenty ring atoms, at least three of which are heteroatoms which are O, N, S or combinations thereof; and (ii) acyclic compounds having at least four atoms other than hydrogen atoms, at least two of which are heteroatoms which are O, N, S or combinations thereof, and in which said heteroatoms are separated by two or three carbon atoms.

### Detailed Description

Unless otherwise specified, all percentages herein are stated as weight percentages and temperatures are in °C. Amounts in parts per million (ppm) are on the basis of weight/volume.

An "alkyl" group is a saturated hydrocarbyl group having from one to twenty carbon atoms, and may be linear, branched or cyclic. In some embodiments of the invention, alkyl groups are linear or branched, alternatively they are linear. In some embodiments, alkyl groups have from one to six carbon atoms, alternatively from one to four carbon atoms.

The reaction of an alkali metal borohydride and an amine borane is shown in the following equation for the case where M is sodium and the amine borane is triethylamine borane

2 NaBH₄ + Excess NEt₃BH₃ → 50-79 % Na₂B₁₂H₁₂ + 5-10 % Na₂B₆H₆ + 5-35% Na₂B₁₀H₁₀ + 1-50% NaB₁₂H₁₁₋ₓ(NEt₃)ₓ + 10 NEt₃ + 13 H₂

The method of the present invention maximizes the amount of the desired product, M₂B₁₂H₁₂ and minimizes formation of competitive hydroborate species. In general, the amine borane is represented as R₃NBH₃, wherein R may represent the same or different alkyl groups and/or hydrogen, provided that at least two alkyl groups are present. Preferably, the alkyl groups are C₁-C₄ acyclic alkyl groups, alternatively methyl or ethyl. Preferably, R does not represent hydrogen, and the amine is a trialkylamine. Preferably, M is sodium or potassium.

In some embodiments of the invention, the complexing agent is at least one compound comprising a ring containing nine to twenty ring atoms. The ring is a carbon-containing ring which also contains at least three heteroatoms selected from O, N, S and combinations thereof. In some embodiments of the invention, the atoms forming the ring consist of carbon and heteroatoms selected from O, N, S and combinations thereof. In some embodiments of the invention, the ring is attached by covalent bonding to a polymer chain, i.e., the polymer chain is a substituent on one or more ring atoms. In some embodiments, the polymer-ring combination will precipitate from water or acidic solutions, enabling its separation from reaction products. In some embodiments of the invention, the complexing agent ring includes atoms which are part of another ring, e.g., the complexing agent ring may include one of more units of formula (I) 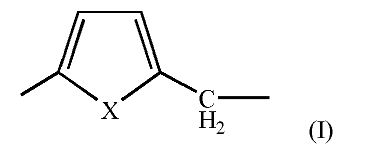 wherein X represents O, S or NH; alternatively at least two units, alternatively no more than four units. In such cases, atoms in the included ring are counted as atoms in the larger complexing agent ring in such a way as to use the lowest possible number of atoms from the included ring, so that in the case illustrated in formula (I), X and its two adjacent carbon atoms are considered part of the complexing agent ring for the purposes of determining whether the ring has from nine to twenty atoms, and of determining the total number of heteroatoms in the ring. In some embodiments of the invention, the complexing agent ring contains from two to six units of formula -(CH₂CH₂X)-, wherein X represents O, S or NH, alternatively from three to six, alternatively from four to six, alternatively five or six. In some embodiments of the invention, two to four units including an aromatic ring may be present in the ring, e.g., those including two carbon atoms from an aromatic ring, like units of formula (II) 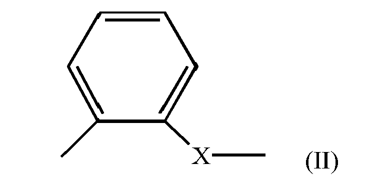 and those including four carbon atoms from an aromatic ring, like units of formula (III) 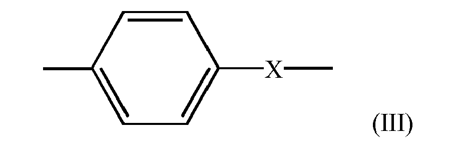 Units of formula (II) are in some cases derived from catechol or 1,2-phenylenediamine. In some embodiments of the invention, aromatic groups are attached to the complexing agent ring, e.g., the ring contains at least one unit of formula -(CHZCH₂X)-, wherein Z is a C₆-C₁₆ substituent group containing at least one aromatic ring, alternatively at least two unit, alternatively no more than 6 units, alternatively no more than 5 units, alternatively no more than 4 units. In some embodiments of the invention, Z is benzyloxy, benzyloxy substituted with alkyl or alkoxy groups, or naphthyloxy. Substituents also may be situated between the benzyloxy group and the -(CHZCH₂X)- unit, e.g., one or more ethyleneoxy or ethylenimine units. Any combination of the various structural units described above may be present. In some embodiments of the invention, the heteroatoms are selected from O, N and combinations thereof. In some embodiments of the invention, the ring contains at least twelve ring atoms, alternatively at least fifteen ring atoms, alternatively no more than eighteen ring atoms. In some embodiments of the invention, the ring contains at least four heteroatoms, alternatively at least five heteroatoms. Preferably, the heteroatom is oxygen. Particularly preferred cyclic complexing agents are 18-crown-6 for M=K and 15-crown-5 for M=Na. These complexing agents include six and five units of formula -(CH₂CH₂O)-, respectively.

In some embodiments of the invention, the complexing agent is an acyclic compound having at least four atoms other than hydrogen atoms, at least two of which are heteroatoms selected from O, N, S and combinations thereof, and in which said heteroatoms are separated by two or three carbon atoms, i.e., there are units of structure X-C-C-X or X-C-C-C-X, such that each heteroatom is separated from each of its nearest neighbor heteroatoms by two or three carbon atoms. The acyclic compound is a carbon-containing compound which also contains the specified number and type of heteroatoms. Examples of such compounds are derivatives of ethylene glycol and ethylenediamine. Oligomers of these compounds, including di-, tri-, tetra- and penta-ethyleneglycols, glymes and other di-alkyl glycol ethers, diethylenetriamine, triethylenetetramine, tetraethylenepentamine, polyethylene glycols and polyethyleneimines also are suitable. Compounds in which the heteroatoms are part of amide or thioamide groups also are suitable, e.g., proteins. In some embodiments of the invention, the complexing agent is an acyclic compound having at least seven atoms, at least three of which are O, N, S or combinations thereof; alternatively at least ten atoms, at least four of which are O, N, S or combinations thereof. In some embodiments of the invention, the complexing agent is an acyclic compound having heteroatoms selected only from among O, N and combinations thereof.

The complexing agent may be a combination of ring compounds and acyclic compounds.

In some embodiments of the invention, complexing agents are used for which the log (base 10) of the formation constant for the complex with sodium or potassium ion, measured at 25°C, is at least 1, alternatively at least 2, alternatively at least 3.

In some embodiments of the invention the amount of complexing agent is from 0.1% to 10% of the amount of alkali metal borohydride, alternatively from 0.5% to 7%, alternatively from 1% to 5%.

Preferably, the reaction occurs at a temperature in the range from 50°C to 200°C, alternatively at least 75°C, alternatively at least 90°C, alternatively no greater than 170°C, alternatively no greater than 150°C, alternatively no greater than 140°C, alternatively no greater than 120°C.

## Claims

1. A method for preparing M₂B₁₂H₁₂, wherein M is an alkali metal, from an alkali metal borohydride and an amine borane; said method comprising allowing the alkali metal borohydride to react with excess amine borane in contact with a complexing agent selected from the group consisting of: (i) rings containing nine to twenty ring atoms, at least three of which are heteroatoms selected from O, N, S and combinations thereof; and (ii) acyclic compounds having at least four atoms other than hydrogen atoms, at least two of which are heteroatoms which are O, N, S or combinations thereof, and in which said heteroatoms are separated by two or three carbon atoms.

2. The method of claim 1 in which M is sodium or potassium.

3. The method of claim 2 in which the complexing agent is a ring containing twelve to twenty ring atoms, at least four of which are heteroatoms which are O, N or combinations thereof.

4. The method of claim 3 in which the ring contains from two to six units of formula -(CH₂CH₂X)-, wherein X represents O, S or NH.

5. The method of claim 4 in which the ring contains from fifteen to eighteen ring atoms.

6. The method of claim 5 in which X is O.

7. The method of claim 2 in which the complexing agent is an acyclic compound having at least seven atoms other than hydrogen atoms, at least three of which are heteroatoms which are O, N, S or combinations thereof.

8. The method of claim 7 in which each heteroatom is separated from each of its nearest neighboring heteroatoms by two carbon atoms.

9. The method of claim 8 in which the heteroatoms are selected from O, N and combinations thereof.

10. The method of claim 9 in which the complexing agent has at least ten atoms other than hydrogen atoms, at least four of which are heteroatoms which are O, N or combinations thereof.
